# EUROPEAN PATENT APPLICATION

(11) **EP 2 704 403 A1**
(43) Date of publication of application: **05.03.2014**
(21) Application number: 12802305.8
(22) Date of filing: 27.03.2012
(51) Int. Cl.: H04L 29/12

(54) **METHOD AND DEVICE FOR CONTROLLING ADDRESS CONFIGURATION MANNER**

(30) Priority: 24.06.2011 CN 201110174179
(71) Applicant: Huawei Technologies Co., Ltd, Shenzhen, Guangdong 518129 (CN)
(72) Inventor: LIU, Bing, Shenzhen Guangdong 518129 (CN); JIANG, Sheng, Shenzhen Guangdong 518129 (CN)
(74) Representative: Maiwald Patentanwalts GmbH
(86) International application number: PCT/CN2012/073083
(87) International publication number: WO 2012/174914

(57) **Abstract**

The present invention discloses a method and a device for controlling an address configuration mode, and belongs to the field of communications. The method includes: specifying, by a network side device, an address configuration mode for a terminal; and sending, by the network side device, a message to the terminal to instruct the terminal to perform address configuration according to the address configuration mode specified by the network side device, where the address configuration mode is a Dynamic Host Configuration Protocol DHCP mode or a stateless address autoconfiguration SLAAC mode. The device includes a setting module and a notifying module. By using the present invention, the network side controls an IP address configuration mode of the terminal.

## Description

### TECHNICAL FIELD

The present invention relates to the field of communications, and in particular, to a method and a device for controlling an address configuration mode.

### BACKGROUND

IPv6 (Internet Protocol version 6, Internet Protocol version 6) supports two address autoconfiguration modes: performing stateful address configuration on the host by means of the DHCPv6 (Dynamic Host Configure Protocol for IPv6, Dynamic Host Configuration Protocol for IPv6) protocol, and performing SLAAC (Stateless Address Autoconfiguration, stateless address autoconfiguration) on the host by means of the ND (Neighbor Discovery, neighbor discovery) protocol.

DHCPv6 is an IPv6 version of the Dynamic Host Configuration Protocol (DHCP). A typical DHCPv6 networking generally includes a DHCPv6 client and a DHCPv6 server. In a process of stateful address configuration, the DHCPv6 server allocates a complete IPv6 address to the DHCPv6 client, and stores a binding relationship between the IPv6 address and the DHCPv6 client, so that manageability of the network is enhanced.

SLAAC is one of important characteristic functions of IPv6. SLAAC adopts the ND Protocol developed for IPv6 to automatically configure an IPv6 address for the host. After the host goes online, the host sends an RS (Router Solicit, router solicit) message to a router to request address configuration; after receiving the RS message, the router sends an RA (Router Advertisement, router advertisement) message to the host, where the RA message carries information such as a prefix used for address autoconfiguration; after receiving the RA message, the host obtains address prefix information and parameter information related to an address, and generates an IPv6 address automatically according to a method specified by SLAAC.

On an IPv6 network in the prior art, SLAAC address configuration and DHCPv6 address configuration may be available simultaneously. For example, when an "M" (Managed Configuration) bit in an RA message is set to 1, a host is informed that DHCPv6 service is available besides ND on a network. Except in special scenarios such as a multihoming scenario, the host generally selects only one address configuration mode to perform configuration. Which address configuration mode is used by the host is controlled by a default policy within the host. For example, a Windows 7 system preferably adopts DHCPv6 for address configuration by default, while a Linux system preferably adopts ND for address configuration by default.

During the implementation of the present invention, the inventor discovers that the prior art has at least the following demerits: The network side cannot control which address configuration mode is used by the host, which affects unified management on the host.

### SUMMARY

To solve the problem in the prior art, embodiments of the present invention provide a method and a device for controlling an address configuration mode.

In one aspect, an embodiment of the present invention provides a method for controlling an address configuration mode, including:
specifying, by a network side device, an address configuration mode for a terminal; and
sending, by the network side device, a message to the terminal to instruct the terminal to perform address configuration according to the address configuration mode specified by the network side device;
where the address configuration mode is a Dynamic Host Configuration Protocol DHCP mode or a stateless address autoconfiguration SLAAC mode.

In another aspect, an embodiment of the present invention provides a device for controlling an address configuration mode, including:
a setting module, configured to specify an address configuration mode for a terminal; and
a notifying module, configured to send a message to the terminal to instruct the terminal to perform address configuration according to the address configuration mode specified by the setting module;
where the address configuration mode is a Dynamic Host Configuration Protocol DHCP mode or a stateless address autoconfiguration SLAAC mode.

Beneficial effects of the technical solutions provided in the embodiments of the present invention are: A network side device specifies an address configuration mode for a terminal, and sends a message to the terminal to instruct the terminal to perform address configuration according to the specified address configuration mode. In this way, control of the IP address configuration mode of the terminal by the network side is implemented, and unified management on the terminal is enhanced.

### BRIEF DESCRIPTION OF DRAWINGS

FIG. 1 is a flowchart of a method for controlling an address configuration mode according to an embodiment of the present invention;
FIG. 2 is a schematic flowchart illustrating the switching of an address configuration mode by a terminal configured with a DHCP address according to an embodiment of the present invention;
FIG. 3 is a schematic diagram of an OPTION_RECONF_SLAAC option according to an embodiment of the present invention;
FIG. 4 is another schematic flowchart illustrating the switching of an address configuration mode by a terminal configured with a DHCP address according to an embodiment of the present invention;
FIG. 5 is a schematic flowchart illustrating the switching of an address configuration mode by a terminal when the terminal requests configuration of a DHCP address according to an embodiment of the present invention;
FIG. 6 is still another schematic flowchart illustrating the switching of an address configuration mode by a terminal configured with a DHCP address according to an embodiment of the present invention;
FIG. 7 is a schematic diagram of a first flag bit according to an embodiment of the present invention;
FIG. 8 is a schematic flowchart illustrating the switching of an address configuration mode by a terminal configured with an SLAAC address according to an embodiment of the present invention;
FIG. 9 is a schematic diagram of a second flag bit according to an embodiment of the present invention;
FIG. 10 is another schematic flowchart illustrating the switching of an address configuration mode by a terminal configured with an SLAAC address according to an embodiment of the present invention;
FIG. 11 is a schematic diagram of a first flag bit and a second flag bit according to an embodiment of the present invention;
FIG. 12 is a schematic structural diagram of a device for controlling an address configuration mode according to an embodiment of the present invention;
FIG. 13 is a schematic structural diagram of a DHCP server according to an embodiment of the present invention; and
FIG. 14 is a schematic structural diagram of a router according to an embodiment of the present invention.

### DESCRIPTION OF EMBODIMENTS

To make the objectives, technical solutions, and advantages of the present invention more comprehensible, the following further describes the embodiments of the present invention in detail with reference to the accompanying drawings.

Control of an address configuration mode involved in embodiments of the present invention refers to that a network side device specifies an address configuration mode, and a terminal performs IP address configuration according to the specified address configuration mode. The address configuration mode includes performing stateful address configuration by means of DHCPv6 or performing stateless address autoconfiguration SLAAC by means of the ND protocol. The terminal includes but is not limited to a mobile terminal and a computer, and may be generally called a host.

When the terminal performs address configuration according to DHCPv6, a DHCPv6 server on the network side allocates a complete IPv6 address to the terminal. When the terminal performs address configuration in the SLAAC mode, a router on the network side allocates to the terminal information such as a prefix used for address autoconfiguration; after receiving the information, the terminal generates an IPv6 address automatically according to the prefix information.

The time when the network side device controls the address configuration mode of the terminal is not limited in the embodiments of the present invention. The address configuration mode may be controlled after the terminal is configured with an IP address or when the terminal initially requests configuration of an IP address.

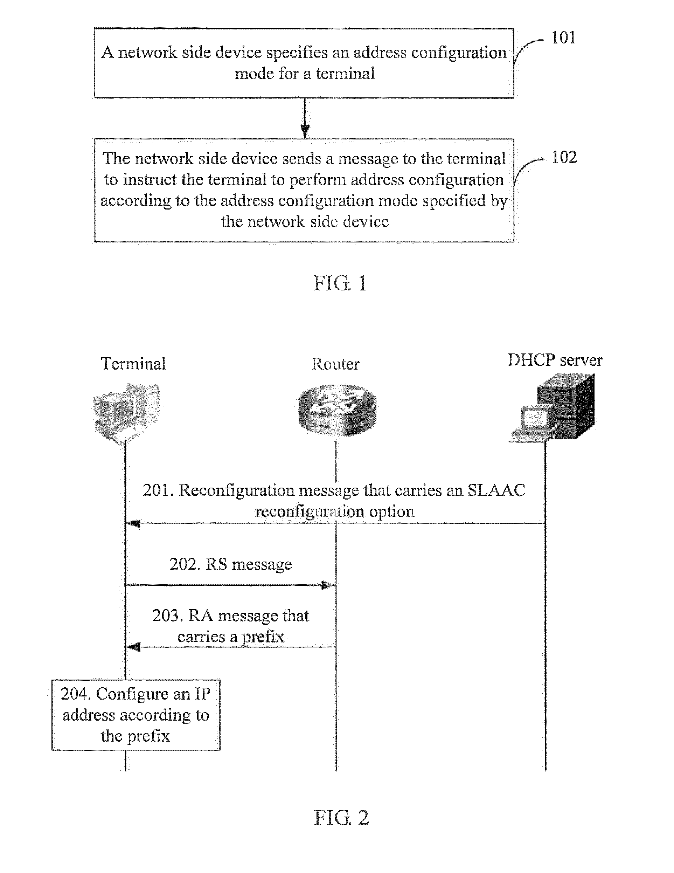

Referring to FIG. 1, an embodiment of the present invention provides a method for controlling an address configuration mode, including the following steps:
101. A network side device specifies an address configuration mode for a terminal.

The address configuration mode includes a DHCP mode or an SLAAC mode.

102. The network side device sends a message to the terminal to instruct the terminal to perform address configuration according to the address configuration mode specified by the network side device.

The network side device may carry a flag bit or an option in the sent message to instruct the terminal to perform address configuration according to the specified address configuration mode. The flag bit or the option may be implemented by adding a new flag bit or a new option to an existing message.

Specifically, 102 includes any one of the following five modes:
Mode 1: A DHCP server sends a reconfiguration message to the terminal, where the reconfiguration message carries an SLAAC reconfiguration option used to instruct the terminal to perform address configuration according to the SLAAC mode.
Mode 2: A DHCP server receives a DHCP request message from the terminal, and sends a DHCP reply message to the terminal, where the DHCP reply message carries an SLAAC reconfiguration option used to instruct the terminal to perform address configuration according to the SLAAC mode.
Mode 3: A router sends an RA message to the terminal, where the RA message carries a first flag bit or a first mandatory address configuration option used to instruct the terminal to perform address configuration according to the SLAAC mode.
Mode 4: A router sends an RA message to the terminal, where the RA message carries a second flag bit or a second mandatory address configuration option used to instruct the terminal to perform address configuration according to DHCP.
Mode 5: A router receives an RS message from the terminal and sends an RA message to the terminal, where the RA message carries a second flag bit or a second mandatory address configuration option used to instruct the terminal to perform address configuration according to DHCP.

In the method provided in the embodiment of the present invention, a network side device specifies an address configuration mode, and sends a message to a terminal to instruct the terminal to perform address configuration according to the specified address configuration mode. In this way, control of the IP address configuration mode of the terminal by the network side is implemented, and unified management on the terminal is enhanced.

The following gives a detailed description with reference to different application scenarios.

Referring to FIG. 2, another embodiment of the present invention provides a method for controlling an address configuration mode. This method is applicable to an application scenario where a terminal has been configured with a DHCPv6 address but the network side expects the terminal to switch the address configuration mode to an SLAAC address configuration mode, and includes:

201. A DHCP server sends a reconfiguration reconfiguration message to a terminal, where the message carries an OPTION_RECONF_SLAAC option, that is, an SLAAC reconfiguration option, where the terminal has been configured with an IP address according to DHCPv6.

Because the address of the terminal is allocated by the DHCP server, the DHCP server is capable of knowing which terminal has been configured with an address according to DHCPv6. If the DHCP server expects a terminal to switch the address configuration mode to an SLAAC address configuration mode, the DHCP server may send a reconfiguration message to the terminal; if the DHCP server expects multiple terminals to switch the address configuration mode to the SLAAC address configuration mode, the DHCP server sends a reconfiguration message to each of the multiple terminals respectively.

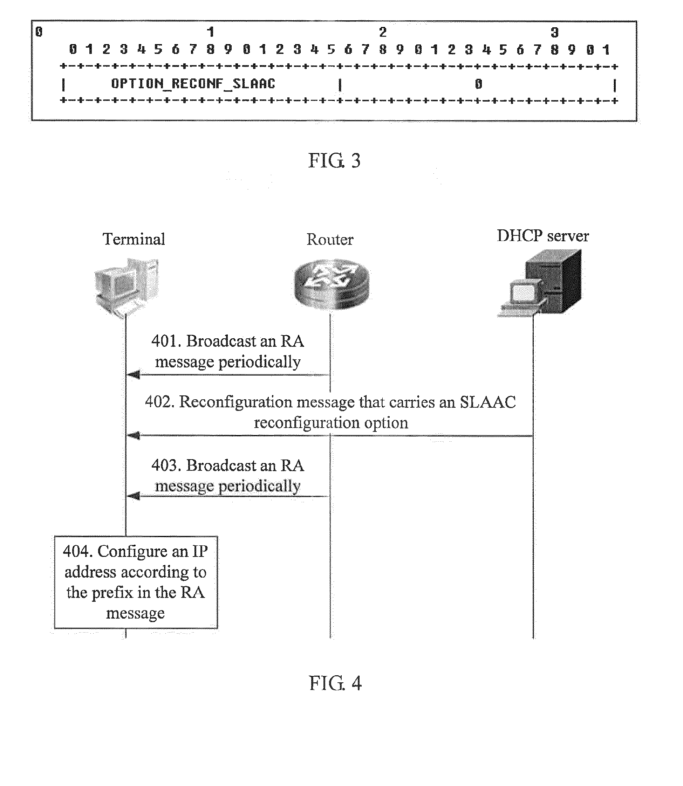

The OPTION_RECONF_SLAAC option is a newly defined DHCPv6 option, and may be carried within a DHCPv6 reconfiguration message. FIG. 3 is a schematic diagram of the OPTION_RECONF_SLAAC option. The length of the OPTION_RECONF_SLAAC option may be set according to needs, which is not specifically limited in the embodiment of the present invention.

202. The terminal receives the reconfiguration message sent by the DHCP server, and determines whether the reconfiguration message includes the OPTION_RECONF_SLAAC option; if the reconfiguration message includes the OPTION_RECONF_SLAAC option, the terminal determines to switch the address configuration mode to the SLAAC address configuration mode, and sends an RS message to a local router to request an IP address prefix; otherwise, the process ends.

The local router refers to a router connected to the terminal. The terminal can access a network through the router, and the router can allocate IP address prefix information to the terminal.

203. After receiving the RS message from the terminal, the router returns an RA message to the terminal, where the RA message carries the allocated IP address prefix information.

204. After receiving the RA message, the terminal configures, according to the IP address prefix information in the RA message, an IP address automatically according to the SLAAC mode.

In addition to the foregoing mode where the terminal proactively sends an RS message to request an IP address prefix, in the embodiment of the present invention, a router may notify a terminal of an IP address prefix by periodically broadcasting an RA message. Referring to FIG. 4, another embodiment of the present invention provides a method for controlling an address configuration mode. This method is applicable to an application scenario where a terminal has been configured with an address according to DHCPv6 but the network side expects the terminal to switch the address configuration mode to an SLAAC address configuration mode and a router supports periodic broadcasting of an RA message, and includes:

401. A router periodically sends an RA message to a terminal on a local link, where the RA message carries IP address prefix information. In this case, a terminal configured with a DHCPv6 address ignores the RA message.

402. A DHCP server sends a reconfiguration reconfiguration message to the terminal that has been configured with an address according to DHCPv6, where the message carries an OPTION_RECONF_SLAAC option.

403. After receiving the reconfiguration message, the terminal determines, according to the OPTION_RECONF_SLAAC option in the reconfiguration message, to switch the address configuration mode to an SLAAC address configuration mode, and receives an RA message broadcast by the local router once again.

404. In this case, the terminal does not ignore the RA message, but performs IP address autoconfiguration according to IP address prefix information in the received RA message.

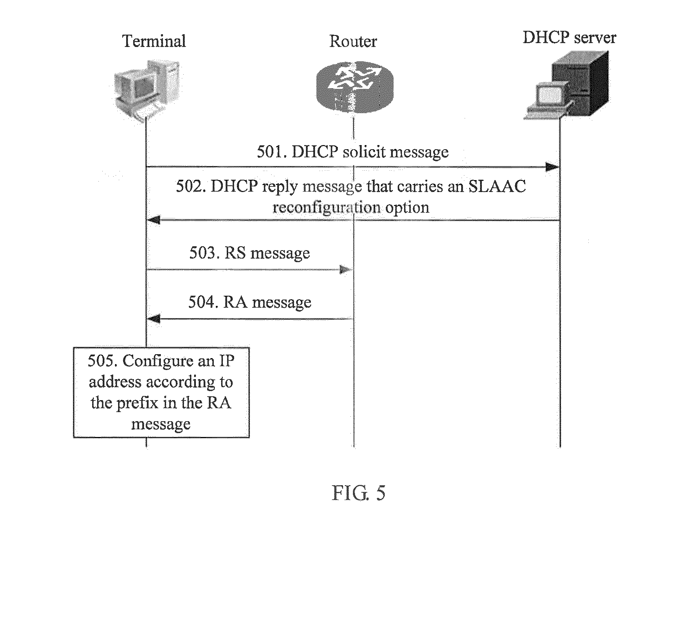

Referring to FIG. 5, another embodiment of the present invention provides a method for controlling an address configuration mode. This method is applicable to an application scenario where a terminal, when going online, selects a DHCPv6 configuration mode preferably but the network side expects the terminal to switch the address configuration mode to an SLAAC address configuration mode. The method includes:

501. When a terminal goes online, the terminal sends a DHCP Solicit solicit message to a DHCP server to request a DHCPv6 stateful address configuration.

The terminal goes online refers to the terminal is connected to a network through a port and the terminal requests the network to allocate an IP address to the port. When the terminal is connected to different networks through different ports, each network allocates an IP address to a corresponding port respectively. This embodiment is based on a scenario where the terminal is connected to a network through one port. A scenario where the terminal is connected to different networks through multiple ports is a mere repetition of the method according to this embodiment, which is not detailed.

In this embodiment, when the terminal goes online to request a DHCP address, the terminal may preferably select a DHCP address configuration mode by default. Therefore, the terminal initiates a DHCP session and sends a DHCP Solicit message. Alternatively, when there is no preferred mode, the terminal initiates a DHCP session and an SLAAC session simultaneously, where the DHCP Solicit message is responded to by the DHCP server, while the RS message is not responded to by a router.

502. After receiving the DHCP Solicit message, the DHCP server sends a DHCP reply reply message to the terminal, where the message carries an OPTION_RECONF_SLAAC option, that is, an SLAAC reconfiguration option.

503. After receiving the DHCP reply message from the DHCP server, the terminal determines whether the reconfiguration message includes the OPTION_RECONF_SLAAC option; if the reconfiguration message includes the OPTION_RECONF_SLAAC option, the terminal determines to switch the address configuration mode to the SLAAC address configuration mode, and sends an RS message to a local router to request an IP address prefix.

504. After receiving the RS message from the terminal, the router returns an RA message with the prefix including IP address prefix information.

505. After receiving the RA message, the terminal performs an SLAAC address configuration according to the IP address prefix information in the RA message.

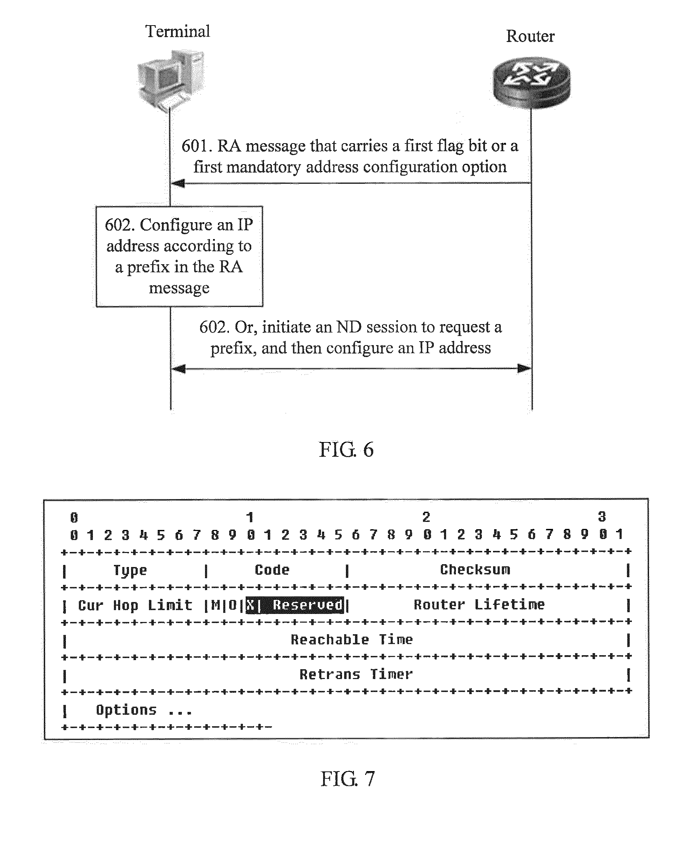

In addition to the foregoing mode where the DHCP server notifies the terminal of the specified address configuration mode, in embodiments of the present invention, a router may notify a terminal of a specified address configuration mode. Referring to FIG. 6, another embodiment of the present invention provides a method for controlling an address configuration mode. This method is applicable to an application scenario where a terminal has been configured with an address according to DHCPv6, but the network side expects the terminal to switch the address configuration mode to an SLAAC address configuration mode. The terminal in this application scenario supports receiving and processing of an RA message sent by a router. The method includes:

601. A router sends an RA message to a terminal, where the RA message carries a first flag bit or a first mandatory address configuration option, and optionally, the RA message may further carry IP address prefix information. The terminal has been configured with an IP address according to DHCPv6.

Referring to FIG. 7, a first flag bit may be a new flag bit extended in six reserved bits in the RA message, for example, a flag bit "X", which occupies one bit and is set to 1 to instruct the terminal to perform address configuration according to an SLAAC mode.

In addition, the first flag bit may also be replaced with a first mandatory address configuration option, for example, a "Manatory Address Configuration" option is carried in the RA message to instruct the terminal to perform address configuration according to the SLAAC mode.

602. After receiving the RA message, the terminal determines whether the RA message includes the first flag bit or the first mandatory address configuration option; if the RA message includes the first flag bit or the first mandatory address configuration option, the terminal determines to switch the address configuration mode to an SLAAC address configuration mode; and if the RA message already carries IP address prefix information, the terminal generates an IP address automatically according to the prefix information.

If the terminal determines to switch the address configuration mode but the RA message does not carry prefix information, the terminal may proactively initiate an ND protocol session, and send an RS message to a router to request prefix information; after receiving an RA message returned from the router, the terminal performs an SLAAC address configuration.

In this embodiment, the terminal has been configured with an address according to DHCPv6, but can still receive an RA message and perform a corresponding determination and processing. Therefore, a router may be used to instruct the terminal to switch the address configuration mode.

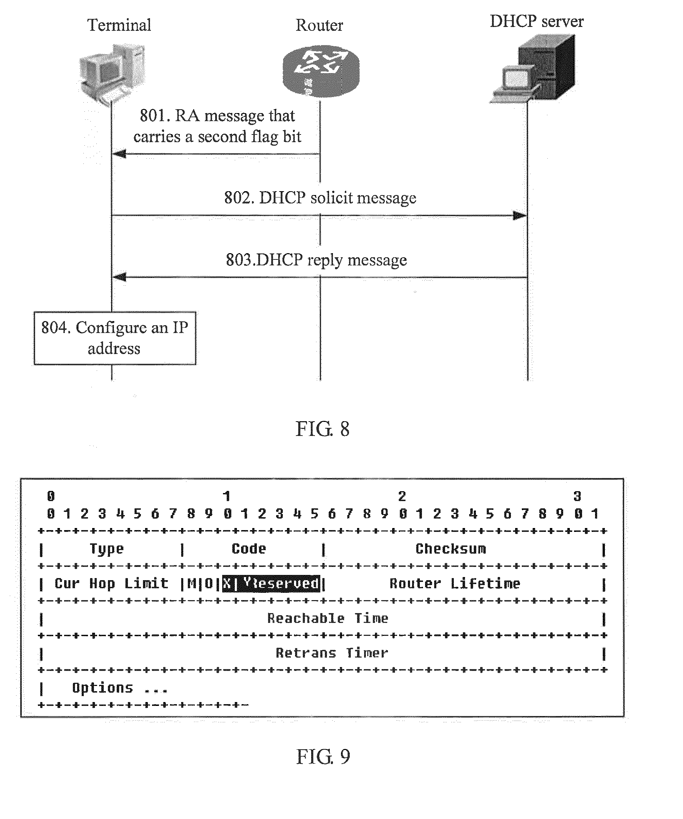

Referring to FIG. 8, another embodiment of the present invention provides a method for controlling an address configuration mode. This method is applicable to an application scenario where a terminal has been configured with an address according to an SLAAC mode but the network side expects the terminal to switch the address configuration mode to a DHCPv6 address configuration mode, and includes:

801. A router sends an RA message, where the RA message carries a second flag bit or a second mandatory address configuration option used to instruct a terminal to perform address configuration according to a DHCP mode.

The RA message may be sent in a broadcasting mode or be sent to the terminal separately, which is not limited in the embodiment of the present invention.

Referring to FIG. 9, a second flag bit may be a new flag bit extended in six reserved bits in the RA message, for example, a flag bit "Y", which occupies one bit and is set to 1 to instruct the terminal to perform address configuration according to a DHCP mode.

In addition, the second flag bit may also be replaced with a second mandatory address configuration option, for example, a "Manatory Address Configuration" option is carried in the RA message to instruct the terminal to perform address configuration according to the DHCP mode.

802. After receiving the RA message, the terminal determines whether the RA message includes the second flag bit or the second mandatory address configuration option; if the RA message includes the second flag bit or the second mandatory address configuration option, the terminal determines to switch the address configuration mode to the DHCP mode, and sends a DHCP solicit solicit message to the DHCP server to request allocation of a DHCPv6 IP address.

803. After receiving the DHCP solicit message, the DHCP server sends a DHCP reply reply message, where the message carries a DHCPv6 address allocated to the terminal.

804. After receiving the DHCP reply message, the terminal obtains the DHCPv6 IP address in the DHCP reply message, and configures the DHCPv6 IP address as an IP address of the terminal. Then, the address configuration ends.

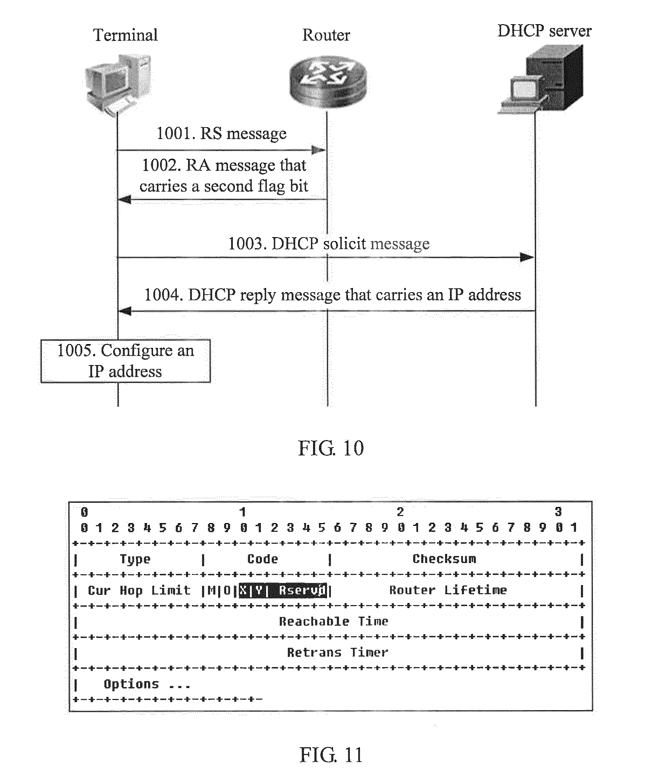

Referring to FIG. 10, another embodiment of the present invention provides a method for controlling an address configuration mode. This method is applicable to an application scenario where a terminal, when going online, selects an SLAAC configuration mode preferably but the network side expects the terminal to switch the address configuration mode to a DHCP address configuration mode, and includes:

1001. When a terminal goes online, the terminal sends an RS message to a router to request SLAAC address configuration.

The terminal goes online refers to the terminal is connected to a network through a port. In this case, the terminal requests the network to allocate an IP address to the port respectively. When the terminal is connected to different networks through different ports, each network allocates an IP address to a corresponding port. This embodiment is based on a scenario where the terminal is connected to a network through one port. A scenario where the terminal is connected to different networks through multiple ports is a mere repetition of the method according to this embodiment, which is not detailed.

In this embodiment, when the terminal goes online to request an SLAAC address, the terminal may preferably select an SLAAC address configuration mode by default. Therefore, the terminal initiates an SLAAC session and sends an RS message. Alternatively, when there is no preferred mode, the terminal initiates an SLAAC session and a DHCP session simultaneously, where the RS message is responded to by a router while the DHCP Solicit message is not responded to by a DHCP server.

1002. After receiving the RS message from the terminal, the router sends an RA message to the terminal, where the RA message carries a second flag bit or a second mandatory address configuration option.

The second flag bit may be a flag bit "Y", and the second mandatory address configuration option may be a "Manatory Address Configuration" option. The second flag bit or the second mandatory address configuration option is used to instruct the terminal to perform address configuration according to the DHCP mode. For details, reference may be made to the description in the foregoing embodiment, which is not detailed.

1003. After receiving the RA message, the terminal determines whether the RA message includes the second flag bit or the second mandatory address configuration option; if the RA message includes the second flag bit or the second mandatory address configuration option, the terminal determines to switch the address configuration mode to the DHCP mode, and sends a DHCP solicit solicit message to the DHCP server to request allocation of a DHCPv6 IP address.

1004. After receiving the DHCP solicit message, the DHCP server sends a DHCP reply reply message to the terminal, where the message includes a DHCPv6 address allocated to the terminal.

1005. After receiving the DHCP reply message, the terminal obtains the DHCPv6 IP address in the DHCP reply message, and configures the DHCPv6 IP address as an IP address of the terminal. Then, the address configuration ends.

In the embodiment of the present invention, two new flag bits may also be extended simultaneously in six reserved bits in the RA message, where the two new flag bits are used to instruct the terminal to perform address configuration according to the SLAAC mode or according to the DHCP mode. In this way, the method can be applied in different scenarios where the method is applied more widely and flexibly.

For example, referring to FIG. 11, two new flag bits are extended in six reserved bits in an RA message. One is a flag bit "X", which occupies one bit and is set to 1 to instruct the terminal to perform address configuration according to the SLAAC mode. The other is a flag bit "Y", which occupies one bit and is set to 1 to instruct the terminal to perform address configuration according to the DHCP mode. When a router needs to instruct the terminal to configure an address according to the SLAAC mode, the router carries the flag bit "X" in the sent RA message, to trigger the terminal to perform address configuration according to the SLAAC configuration mode; when the router needs to instruct the terminal to configure an address according to the DHCP mode, the router carries "Y" in the sent RA message, to trigger the terminal to perform address configuration according to the DHCP mode. In this way, an effect that the network side proactively determines an address configuration mode of the terminal is achieved.

In the methods for controlling an address configuration mode in the foregoing application scenarios provided in embodiments of the present invention, a DHCP server or a router sends a message to a terminal to instruct the terminal to perform address configuration according to a DHCP configuration mode or an SLAAC configuration mode, so that the network side controls the IP address configuration mode of the terminal. The network side can proactively determine that the terminal uses a DHCPv6 stateful address configuration mode or an SLAAC address configuration mode, thereby enhancing unified management on the terminal. A flag bit or a mandatory address configuration option is carried in a message to instruct the terminal to switch the address configuration mode, which is simple, convenient, and easy to implement. In different scenarios, different modes are used for instruction, making the application flexible and practicable.

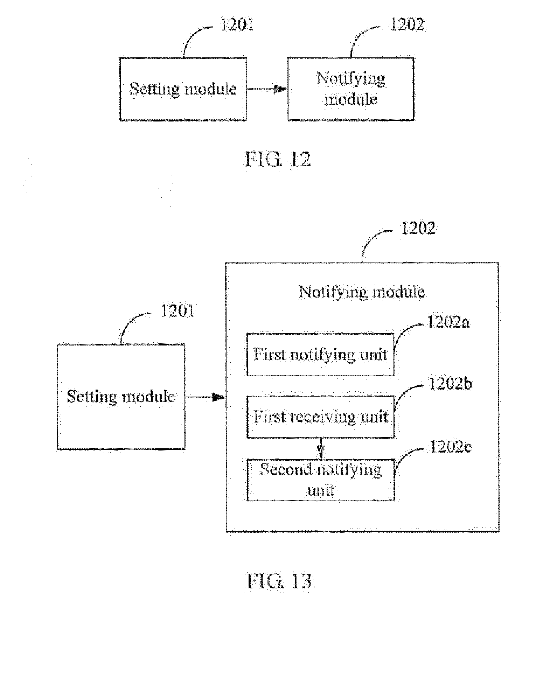

Referring to FIG. 12, an embodiment of the present invention provides a device for controlling an address configuration mode, including:
a setting module 1201, configured to specify an address configuration mode for a terminal; and
a notifying module 1202, configured to send a message to the terminal to instruct the terminal to perform address configuration according to the address configuration mode specified by the setting module 1201.

The address configuration mode is a DHCP mode or an SLAAC mode.

Referring to FIG. 13, the device may be specifically a DHCP server. In this case, the notifying module 1202 includes:
a first notifying unit 1202a, configured to send a reconfiguration message to the terminal, where the reconfiguration message carries an SLAAC reconfiguration option used to instruct the terminal to perform address configuration according to the SLAAC mode.

Or, the device is a DHCP server and the notifying module 1202 includes:
a first receiving unit 1202b, configured to receive a DHCP request message from the terminal; and
a second notifying unit 1202c, configured to send a DHCP reply message to the terminal after the first receiving unit 1202b receives the DHCP request message, where the DHCP reply message carries an SLAAC reconfiguration option used to instruct the terminal to perform address configuration according to the SLAAC mode.

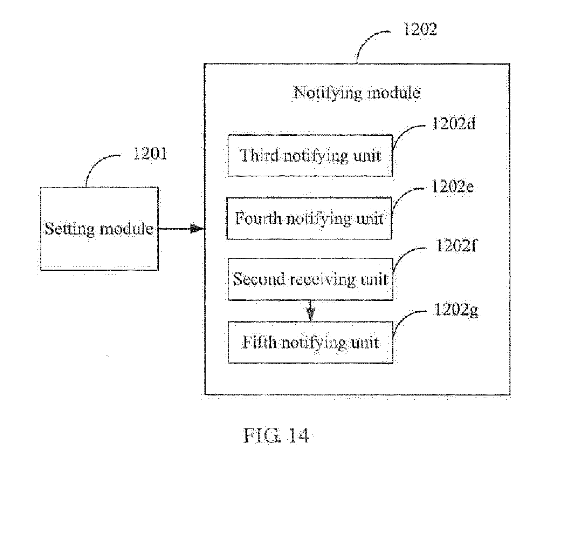

Or, referring to FIG. 14, the device is a router and the notifying module 1202 includes:
a third notifying unit 1202d, configured to send a router advertisement RA message to the terminal, where the RA message carries a first flag bit or a first mandatory address configuration option used to instruct the terminal to perform address configuration according to the stateless address autoconfiguration SLAAC mode.

Or, the device is a router and the notifying module 1202 includes:
a fourth notifying unit 1202e, configured to send an RA message to the terminal, where the RA message carries a second flag bit or a second mandatory address configuration option used to instruct the terminal to perform address configuration according to DHCP.

Or, the device is a router and the notifying module 1202 includes:
a second receiving unit 1202f, configured to receive an RS message from the terminal; and
a fifth notifying unit 1202g, configured to send an RA message to the terminal after the second receiving unit 1202f receives the RS message, where the RA message carries a second flag bit or a second mandatory address configuration option used to instruct the terminal to perform address configuration according to the DHCP mode.

By using the device provided in the embodiment of the present invention, an address configuration mode is specified, and a message is sent to a terminal to instruct the terminal to perform address configuration according to the specified address configuration mode. In this way, the network side controls the IP address configuration mode of the terminal, thereby enhancing unified management on the terminal. A flag bit or a mandatory address configuration option is carried in a message to instruct the terminal to switch the address configuration mode, which is simple, convenient, and easy to implement.

Finally, it should be noted that a person of ordinary skill in the art should understand that all or a part of the processes of the methods in the embodiments may be implemented by a computer program instructing relevant hardware. The program may be stored in a computer readable storage medium. When the program runs, it may include the processes of the methods in the foregoing embodiments. The storage medium may be a magnetic disk, an optical disk, a read-only memory (ROM) or a random access memory (RAM).

Functional units in the embodiments of the present invention may be integrated into one processing module, or each of units may exist alone physically, or two or more units are integrated into one module. The integrated modules may be implemented in a form of hardware, or may be implemented in a form of software functional modules. When being implemented in a form of software functional modules and sold or used as an independent product, the integrated modules may also be stored in a computer readable storage medium. The foregoing storage medium may be a read-only memory, a magnetic disk or an optical disk. The foregoing apparatuses and systems may perform the methods described in the method embodiments.

The foregoing descriptions are merely exemplary embodiments of the present invention, but are not intended to limit the present invention. Any modification, equivalent replacement, or improvement made within the spirit and principle of the present invention shall fall within the protection scope of the present invention.

## Claims

1. A method for controlling an address configuration mode, comprising:
specifying, by a network side device, an address configuration mode for a terminal; and
sending, by the network side device, a message to the terminal to instruct the terminal to perform address configuration according to the address configuration mode specified by the network side device;
wherein the address configuration mode is a Dynamic Host Configuration Protocol DHCP mode or a stateless address autoconfiguration SLAAC mode.

2. The method according to claim 1, wherein the sending, by the network side device, a message to the terminal to instruct the terminal to perform address configuration according to the address configuration mode specified by the network side device comprises:
sending, by a DHCP server, a reconfiguration message to the terminal, wherein the reconfiguration message carries an SLAAC reconfiguration option used to instruct the terminal to perform address configuration according to the SLAAC mode.

3. The method according to claim 1, wherein the sending, by the network side device, a message to the terminal to instruct the terminal to perform address configuration according to the address configuration mode specified by the network side device comprises:
receiving, by a DHCP server, a DHCP request message from the terminal; and
sending, by the DHCP server, a DHCP reply message to the terminal, wherein the DHCP reply message carries an SLAAC reconfiguration option used to instruct the terminal to perform address configuration according to the SLAAC mode.

4. The method according to claim 1, wherein the sending, by the network side device, a message to the terminal to instruct the terminal to perform address configuration according to the address configuration mode specified by the network side device comprises:
sending, by a router, a router advertisement RA message to the terminal, wherein the RA message carries a first flag bit or a first mandatory address configuration option used to instruct the terminal to perform address configuration according to the stateless address autoconfiguration SLAAC mode.

5. The method according to claim 1, wherein the sending, by the network side device, a message to the terminal to instruct the terminal to perform address configuration according to the address configuration mode specified by the network side device comprises:
sending, by a router, an RA message to the terminal, wherein the RA message carries a second flag bit or a second mandatory address configuration option used to instruct the terminal to perform address configuration according to DHCP.

6. The method according to claim 1, wherein the sending, by the network side device, a message to the terminal to instruct the terminal to perform address configuration according to the address configuration mode specified by the network side device comprises:
receiving, by a router, a router solicitation RS message sent by the terminal; and
sending, by the router, an RA message to the terminal, wherein the RA message carries a second flag bit or a second mandatory address configuration option used to instruct the terminal to perform address configuration according to DHCP.

7. A device for controlling an address configuration mode, comprising:
a setting module, configured to specify an address configuration mode for a terminal; and
a notifying module, configured to send a message to the terminal to instruct the terminal to perform address configuration according to the address configuration mode specified by the setting module;
wherein the address configuration mode is a Dynamic Host Configuration Protocol DHCP mode or a stateless address autoconfiguration SLAAC mode.

8. The device according to claim 7, wherein the device is a DHCP server and the notifying module comprises:
a first notifying unit, configured to send a reconfiguration message to the terminal, wherein the reconfiguration message carries an SLAAC reconfiguration option used to instruct the terminal to perform address configuration according to the SLAAC mode.

9. The device according to claim 7, wherein the device is a DHCP server and the notifying module comprises:
a first receiving unit, configured to receive a DHCP request message from the terminal; and
a second notifying unit, configured to send a DHCP reply message to the terminal after the first receiving unit receives the DHCP request message, wherein the DHCP reply message carries an SLAAC reconfiguration option used to instruct the terminal to perform address configuration according to the SLAAC mode.

10. The device according to claim 7, wherein the device is a router and the notifying module comprises:
a third notifying unit, configured to send a router advertisement RA message to the terminal, wherein the RA message carries a first flag bit or a first mandatory address configuration option used to instruct the terminal to perform address configuration according to the stateless address autoconfiguration SLAAC mode.

11. The device according to claim 7, wherein the device is a router and the notifying module comprises:
a fourth notifying unit, configured to send an RA message to the terminal, wherein the RA message carries a second flag bit or a second mandatory address configuration option used to instruct the terminal to perform address configuration according to DHCP.

12. The device according to claim 7, wherein the device is a router and the notifying module comprises:
a second receiving unit, configured to receive a router solicitation RS message sent by the terminal; and
a fifth notifying unit, configured to send an RA message to the terminal after the second receiving unit receives the RS message, wherein the RA message carries a second flag bit or a second mandatory address configuration option used to instruct the terminal to perform address configuration according to DHCP.
